# EUROPEAN PATENT SPECIFICATION

(11) **EP 2 061 300 B1**
(45) Date of publication and mention of the grant of the patent: **07.09.2011**
(21) Application number: 07808885.3
(22) Date of filing: 11.09.2007
(51) Int. Cl.: A01B 21/08

(54) **AN AGRICULTURAL MACHINE**
LANDMASCHINE
MACHINE AGRICOLE

(30) Priority: 12.09.2006 SE 0601887
(43) Date of publication of application: 27.05.2009
(73) Proprietor: Väderstad-Verken AB, 590 21 Stockholm (SE)
(72) Inventor: GILSTRING, Gert, 590 21 Väderstad (SE)
(74) Representative: Karlsson, Leif Karl Gunnar
(86) International application number: PCT/SE2007/050648
(87) International publication number: WO 2008/033091

(56) References cited:
- WO-A-2004/004437
- DE-A1- 10 328 210
- DE-A1-102005 025 334
- DE-U1-202004 020 159
- FR-A- 2 865 102

## Description

### TECHNICAL AREA

The invention relates to an agricultural machine comprising a plurality of discs for soil cultivation, whereof at least one fore disc is mounted on a fore structure element and at least one rear disc is mounted on a rear structure element via a respective connecting member. The fore and the rear disc have rotation axes that, projected in a horizontal plane, form angles to a conceptual horizontal cross-axis that is perpendicular to the intended driving direction of the agricultural machine. More precisely a first angle between the rotation axis of the fore disc and the cross-axis is greater than a second angle between the rotation axis of the rear disc and the cross-axis.

### BACKGROUND OF THE INVENTION

A long-known type of so-called disc cultivator displays disc axles that form the shape of an X, wherein a plurality of rotatable discs are positioned at distance from each other along each disc axle and `threaded' thereon so that their rotation axes are in common with the respective disc axle. Such 'X-cultivators' are associated with a range of known disadvantages, such as large space requirement parallel to the driving direction of the cultivator, difficulties in replacing discs, and in many cases inadequate results in soil cultivation.

Several of these disadvantages are absent at another known type of agricultural machine that comprises a fore and a rear row of angled discs, which rows are orientated in the cross-direction of the machine, and where the discs are mounted on structure elements in the form of beams via respective connecting members. The discs on the fore row are directed in a common direction and the discs on the rear row are directed in the opposite direction. However this solution is associated with the disadvantage that the machine is unstable in the lateral direction.

To rectify the mentioned lateral instability, another arrangement presents a solution where discs to the right are angled in the opposite direction in relation to discs on the left in the same row, wherein discs in the rear row are angled in the opposite direction in relation to discs in front. Furthermore the discs are normally angled so that the fore row's discs effect a certain lateral outward displacement of soil, while the rear row's discs to a certain extent displace soil inwards.

A problem with formation of a soil wall in the centre of the area over which the machine passes has been countered by rotation axes for discs in the fore row exhibiting greater angles to the cross-direction of the machine than rotation axes for discs in the rear row. The smaller angle for the discs in the rear row compensates for the greater amount of soil that would otherwise have been displaced by the rear discs since they, in addition to soil displaced by the fore discs, also displace further soil that had not been torn up by the fore discs. Thus at machines where the fore discs are adapted to displace soil laterally during movement of the agricultural machine in the driving direction and the rear discs are adapted to laterally displace in the opposite direction the soil displaced by the fore discs, the smaller cutting angle for the rear discs means that soil walling in the area over which the machine passes is decreased.

A disadvantage with known types of disc cultivators that comprise such fore and rear rows of discs, where rotation axes for discs in the fore row exhibit greater angles to the cross-direction of the machine than rotation axes for discs in the rear row, is that the respecting connecting members that connect the discs with the beams must be provided in several embodiments, depending on whether the discs are to sit in fore or rear. This means that the number of types of parts that are included in the machine becomes relatively high, which renders production relatively complicated and expensive.

An agricultural machine in accordance with the preamble of claim 1 is known from WO-A-2004/004437.

### SUMMARY OF THE INVENTION

An aim of the invention is to simplify manufacturing of an agricultural machine of the initially described type.

A further aim of the invention is to make manufacturing of an agricultural machine of the initially described type cheaper and more cost-effective.

Yet another aim of the invention is to make an agricultural machine of the initially described type more maintenance-friendly.

Another aim of the invention is to provide an agricultural machine of the initially described type that is arranged in such a way that the specified disadvantages with the known solutions are reduced to the greatest possible extent.

This aim is achieved with an agricultural machine of the initially described type, wherein the fore and the rear structure element are orientated at an angle relative to each other.

That the fore and the rear structure element are orientated at an angle relative to each other means that they are not parallel. It is thereby possible in an easy way to achieve the advantageous angle difference between the fore and rear discs through suitable choice of the angle between the respective structure element on which the discs are mounted. An angle between the rotation axis of the fore disc and the fore structure element is preferably essentially of the same magnitude as an angle between the rotation axis of the rear disc and the rear structure element. The angle between the structure elements is thereby essentially of the same magnitude as the difference between the first and the second angle. This in its turn makes it possible to use identical connecting members for the discs, which simplifies manufacturing of the agricultural machine. This in its turn makes manufacturing of the agricultural machine cheaper and more cost-effective. In addition it becomes possible to decrease the number of constituent spare parts constructions, which makes the agricultural machine more maintenance-friendly.

The difference between the first and the second angle is preferably 2-6 degrees. It has been shown that this choice of angle difference between the fore and rear discs gives very good results in attempts to eliminate wall formation after the machine. The best results have emerged when the difference between the first and the second angle is approximately 3 degrees.

It should be noted that the relative positioning of the discs can be arranged in any suitable way at all. e.g. in rows that have their main extension perpendicular to the intended driving direction of the agricultural machine. Generally at least two fore discs and at least two rear discs are distributed on each side of a conceptual, longitudinal axis, which is parallel with the driving direction, and wherein the left fore disc and the left rear disc are angled in the opposite direction in relation to the right fore disc and the right rear disc, respectively. Therein the fore and the rear discs are preferably angled so that during soil cultivation they displace soil outwards and inwards respectively. i.e. away from or towards the longitudinal axis.

Preferably, the left fore disc is mounted on a fore structure element and the right rear disc is mounted on a right rear structure element via a respective connecting member, and wherein the fore structure element and the right rear structure element are orientated at an angle relative to each other. Thereby an angle between the rotation axis of the left fore disc and the fore structure element is preferably essentially of the same magnitude as an angle between the rotation axis of the right rear disc and the right rear structure element. The angle between the fore structure element and the right rear structure element is thereby of the same magnitude as the difference between the angle between the rotation axis of the left fore disc and the cross-axis, and the angle between the rotation axis of the right rear disc and the cross-axis. This in its turn makes it possible to use identical connecting members for the left fore disc and the right rear disc, which simplifies manufacturing of the agricultural machine.

In a corresponding way, preferably, the right fore disc is mounted on a fore structure element and the left rear disc is mounted on a left rear structure element via a respective connecting member, and wherein the fore structure element and the left rear structure element are orientated at an angle relative to each other. Therein an angle between the rotation axis of the right fore disc and the fore structure element is preferably essentially of the same magnitude as an angle between the rotation axis of the left rear disc and the left rear structure element. The angle between the fore structure element and the left rear structure element is thereby of the same magnitude as the difference between the angle between the rotation axis of the right fore disc and the cross-axis, and the angle between the rotation axis of the left rear disc and the cross-axis. This in its turn makes it possible to use identical connecting members for the right fore disc and the left rear disc, which simplifies manufacturing of the agricultural machine.

Preferably, where at least two fore discs and at least two rear discs are located on each side of the longitudinal axis, whereof an inner fore disc and an inner rear disc are located nearer the longitudinal axis than an outer fore disc and an outer rear disc, respectively, the relative distance between the inner fore disc and the inner rear disc is greater than the relative distance between the outer fore disc and the outer rear disc. This achieves a distribution of the discs in the longitudinal direction of the machine, which comes to counteract the tendency of the agricultural machine, on the basis of its self-frequency, at an unfavourable combination of soil consistency and driving speed, to execute a repeated hopping movement. More precisely, a spreading of soil cultivating discs in the intended driving direction of the machine is achieved, which comes to counteract the self-oscillating tendencies that, at an unfavourable combination of soil consistency and driving speed, arise with a concentration of discs to a few points along the driving direction.

A distance between those of the rear discs that are located nearest the longitudinal axis is preferably greater than a distance between those of the fore discs that are located nearest the longitudinal axis. This achieves a further reduction of tendencies for wall formation in the middle of the area over which the machine passes during soil cultivation.

Preferably, the at least one left fore disc and the at least one right rear disc are mounted on a respective structure element via a respective connecting member, wherein an angle between the structure elements is essentially of the same magnitude as the difference between the first and the second angle. This means that the angles between the discs and the respective structure element can be essentially similar, and that the connecting member for left fore disc and the rear right discs can be similar. This simplifies production of the agricultural machine since a number of component parts can be manufactured with identical design. Naturally, with achievement of the corresponding advantage, the at least one right fore disc and the at least one left rear disc can be mounted on a respective structure element via a respective connecting member, wherein the angle between the structure elements is essentially of the same magnitude as the difference between the first and the second angle.

### DRAWING SUMMARY

Embodiments of the invention will be described in more detail below with reference to the drawings in which
- Fig. 1 is a perspective view obliquely from behind of a tractor with a rear linked agricultural machine according to a preferred embodiment of the invention,
- Fig. 2 shows a top view of a portion of the agricultural machine in Fig. 1, and
- Fig. 3 shows a detail of the portion in Fig. 2.

### DETAILED DESCRIPTION

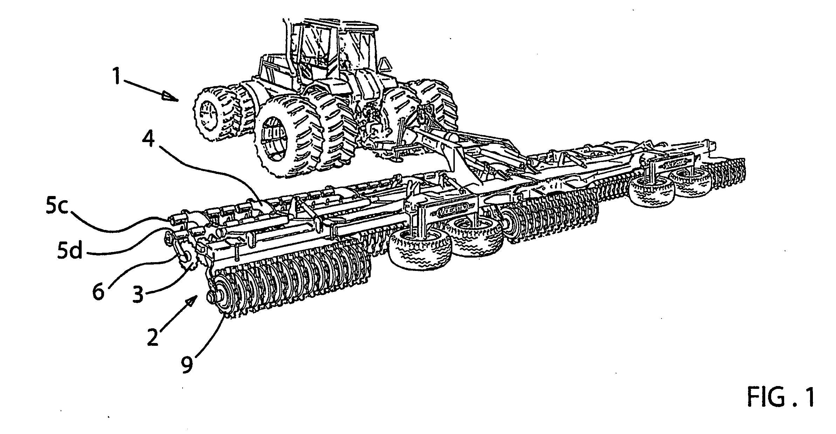

Fig. 1 shows a tractor 1 with a rear linked agricultural machine 2, in the form of a disc cultivator, which displays a plurality of discs 3 for soil cultivation. Each disc 3 is via a connecting member 6 mounted on a structure element 5c, 5d, as is described more closely in the following. The structure elements 5c, 5d are in turn mounted on a frame 4 at the agricultural machine 2. The agricultural machine 2 also comprises five ring roller sections 9 which, in the intended driving direction of the agricultural machine, are arranged behind the discs 3. As an alternative or complement to such ring roller sections 9 the machine 2 can be provided with some other type of similar organ, e.g. one or more packer wheels or similar.

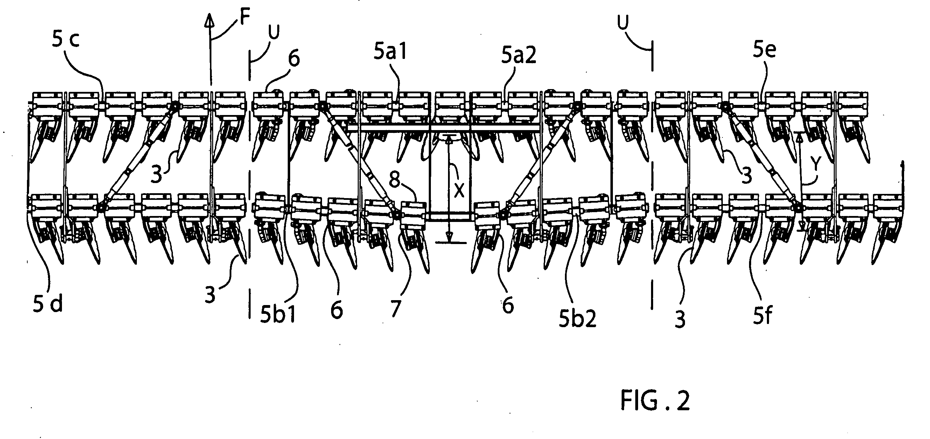

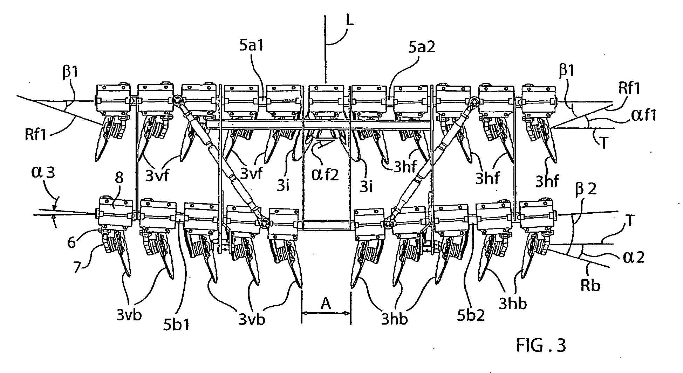

Fig. 2 shows a top view of a portion of the agricultural machine 2, the intended driving direction of which is indicated with an arrow F. The structure elements 5a1-5f are elongated and provided in the form of beams, in this example steel pipe with quadratic cross-section. The structure elements 5a1-5f are distributed as inner structure elements 5a1, 5a2, 5b1, 5b2 and outer structure elements 5c, 5d, 5e, 5f. The dividing areas for the inner and outer structure elements are indicated in Fig. 2 with dashed lines U. The agricultural machine 2 is in a known way adapted so that the outer structure elements 5c, 5d, 5e, 5f are jointed at outer ends of the inner structure elements 5a1, 5a2, 5b1, 5b2, so that the responsiveness of the machine on soil irregularities is improved, and the outer structure elements 5c, 5d, 5e, 5f can be swung aside for decreasing the width of the machine 2 and facilitating road transport. However the agricultural machine 2 can according to the invention be provided without such jointed outer structure elements. Instead it can display only rigidly co-bound structure elements, e.g. corresponding to the inner structure elements shown in Fig. 3.

The inner structure elements are distributed as a left positioned and a right positioned fore structure element 5a1, 5a2, and a left positioned and a right positioned rear structure element 5b1, 5b2. It should be noted that the fore inner structure element can naturally be replaced with a single structure element, or with more than two structure elements. A plurality of connecting members 6 each singly connect a disc 3 with the respective structure element 5a1-5b2, e.g. in a way described in the application associated with Swedish patent SE523890 and incorporated here by means ofcitation. Each connecting member 6 comprises an arm 7 and a fastening device 8, in the form of a clamp connection 8. for fastening of the connecting member 6 according to known technique to the respective structure element 5a1-5b2. Each disc 3 is rotatably mounted on a respective arm 7 via a hub, so that the disc 3 can rotate around a respective rotation axis through its centre 3. A rubber element (not shown) positioned between the clamp connection 8 and the respective structure element 5a1-5b2 allows a springing turning action of the clamp connection 8 around the structure element, so that the disc 3 can execute a springing action in a vertical plane, e.g. in the event of the movement of the machine 2 impacting against a hard object such as a stone.

Through the described connection with structure elements 5a1-5b2 mainly orientated in the across direction the discs 3 arc arranged in two rows that have their main extension perpendicular to the intended driving direction of the agricultural machine.

Fig. 3 shows a detail of Fig. 2, more precisely the inner structure elements 5a1-5b2, which bear a respective plurality fore and a plurality rear of the discs 3vf, 3hf, 3vb, 3hb, which are rotatable and angled. The rotation axes of the discs are angled partly in a horizontal plane (plane of the diagram) and also in a vertical plane. The rear discs 3vb, 3hb are in the horizontal plane angled in the opposite direction in relation to the fore discs 3vf, 3hf. The discs are furthermore arranged symmetrically in a plurality on each side of a a conceptual, horizontal longitudinal axis L. which is parallel to the intended driving direction of the agricultural machine 2. The left fore and rear discs 3vf, 3vb are in the horizontal plane angled in the opposite direction in relation to the right fore and rear discs 3vf, 3hf respectively.

The discs are arranged so that each one of the fore discs 3vf, 3hf, at movement of the agricultural machine in the driving direction, laterally displaces soil, and each one of the rear discs 3vb, 3hb in the opposite direction liberally displaces at least a part of the soil displaced by a fore disc 3vf, 3hf.

As can be seen in Fig. 3, the rotation axes Rf1 for all fore discs 3vf, 3hf on the fore structure elements 5a1, 5a2, apart from the two sitting nearest the longitudinal axis L, each one, projected in the horizontal plane, form a first angle αf1 to a conceptual horizontal cross-axis T that is perpendicular to the intended driving direction F of the agricultural machine 2. The rotation axes Rb for all rear discs 3vb, 3hb on the rear structure element 5b, each one, projected in the horizontal plane, form a second angle α2 to the cross-axis T. The first angle αf1 is greater than the second angle α2, and the difference between the angles is approximately 3 degrees.

The difference in angle is achieved through that the rear inner structure elements 5b1, 5b2 are angled in relation to the fore inner structure elements 5a1, 5a2. More precisely, the fore structure elements are parallel to the cross-axis T, while the rear structure elements 5b1, 5b2 are angled to the cross-axis T by an amount α3 that corresponds to the difference between the first and the second angle αf1, α2. This means that the angles between the discs and the respective structure element can be essentially similar. As can be seen in Fig. 3 an angle β1 between the rotation axes Rf1 of the left fore discs 3vf and the left fore structure element 5a1 is essentially of the same magnitude as an angle β2 between the rotation axes Rb of the right rear discs 3hb and the right rear structure element 5b2, and in addition an angle β1 between the rotation axes Rf1 of the right fore discs 3hf and the right fore structure element 5a2 is essentially of the same magnitude as an angle β2 between the rotation axes Rb of the left rear discs 3vb and the left rear structure element 5b1. The connecting members 6 for the left fore discs 3vf and the right rear discs 3hb can thereby be similar and the connecting members 6 for the right fore discs 3hf and the left rear discs 3vb can be similar.

As can be seen in Fig. 2 and 3 the arrangement with the angled structure elements 5b1, 5b2 means that the relative distance X (Fig. 3) between an inner fore and an inner rear disc is greater than the relative distance Y between an outer fore and an outer rear disc. In particular there is achieved a varying distance relationship between the fore row of discs 3vf, 3hf and the rear row of discs 3vb, 3hb. This comes to counteract the tendency of the agricultural machine 2, on the basis of its self-frequency, at an unfavourable combination of soil consistency and driving speed, to execute a repeated hopping movement. In addition the risk is decreased of wall forming of soil in the middle of the area over which the machine passes. The reason is that soil that during conveyance of the machine is set in a lateral movement by the fore discs comes to be displaced further to the side in the central portion of the machine than at its outer parts. The reason for this is in its turn that at the central portion of the machine, the soil set in an outward movement can travel a greater distance before it comes into contact with the rear discs. This transport of soil outwards comes to compensate for the described above inward transport of soil, which is caused by the rear discs displacing inwards both soil that has been torn up by the fore discs and also soil that is torn up by the rear discs.

Preferably at least one ring roller section 9 is provided at the central portion of the machine, behind the rear discs. Preferably the distance of that ring roller section to the rear discs in the central portion of the machine is less than the distance between the rear and fore discs in the mentioned central portion. This means that soil set in inward movement by the rear discs, due to contact with the behind-lying ring roller section is transported a shorter distance in the cross direction than soil set in outward movement by the fore discs. This contributes in its turn to further increase the net transport of soil outwards.

As can be seen in Fig. 3. the rotation axes for the two fore discs 3i that are located nearest the longitudinal axis L. each one, projected in the horizontal plane, forms a third angle αf2 to the conceptual horizontal cross-axis T, which is greater than the first angle αf1.

As can also be seen in Fig. 3. a distance A between the rear discs 3vb, 3hb, which are located nearest the longitudinal axis L is greater than a distance between the fore discs 3i that are located nearest the longitudinal axis (L). This achieves a further reduction of tendencies for wall formation in the middle of the area over which the machine 2 passes during cultivation.

The agricultural machine 2 in the embodiment described above is with the jointed outer structure elements 5c, 5d, 5e, 5f designed with angled inner rear structure elements 5b1. 5b2 and in a cross-direction orientated outer rear structure elements 5d, 5f. Alternatively the agricultural machine 2 can be designed with all rear structure elements arranged at an angle α3 to the cross-axis T. For example the disc-bearing structure elements 5a1, 5a2. 5b1, 5b2 that are shown in Fig. 3 can comprise all disc-bearing structure elements on the agricultural machine 2. An embodiment with all rear structure elements arranged at an angle α3 to the cross-axis can further improve the soil tillage result. This is due to that the angles on the rear disc row at the transitions between outer 5d, 5f and inner 5b1, 5b2 rear structure elements are lacking at which angles some wall formation of soil can otherwise occur. However an advantage with the embodiment described above, with outer rear structure elements 5d, 5f orientated parallel to the cross-direction, is that a machine with large width and short length can be produced.

A large number of alternatives to the embodiments described above are contained within the scope of the patent claims. For example the left fore and rear discs can be displaced along the longitudinal axis L in relation to the right fore and rear discs. Furthermore the rear structure elements 5b1, 5b2 can be parallel to the cross-axis T. and the fore structure elements 5a1, 5a2 can be angled so that their outer ends are positioned further forward in the driving direction F, whereby the above described angle difference is achieved.

## Claims

1. An agricultural machine comprising a plurality of discs (3, 3vf, 3hf, 3vb, 3hb) for soil cultivation, whereof at least one fore disc (3vf, 3hf) is mounted on a fore structure element (5a1, 5a2) and at least one rear disc (3vb, 3hb) is mounted on a rear structure element (5b1, 5b2) via a respective connecting member (6), wherein the fore and the rear structure elements (5a1, 5a2, 5b1, 5b2) are orientated at an angle (α3) relative to each other, **characterised**
- **in that** a first angle (αf1) between the rotation axis (Rf1) of the fore disc (3vf, 3hf), projected in a horizontal plane, and a conceptual horizontal cross-axis (T), which is perpendicular to the intended driving direction (F) of the agricultural machine, is greater than a second angle (α2) between the rotation axis (Rb) of the rear disc (3vb, 3hb), projected in the horizontal plane, and the cross-axis (T),
- **in that** at least two fore discs (3vf, 3hf) and at least two rear discs (3vb, 3hb) are located on each side of a conceptual, longitudinal axis (L), which is parallel with the driving direction (F), an inner fore disc and an inner rear disc (3i, 3vf, 3hf, 3vb, 3hb) being located nearer the longitudinal axis (L) than an outer fore disc and outer rear disc (3vf, 3hf, 3vb, 3hb), respectively, the left fore disc (3vf) and the left rear disc (3vb) being angled in the opposite direction in relation to the right fore disc (3hf) and the right rear disc (3hb), respectively, the fore discs being angled so that during soil cultivation they displace soil away from the longitudinal axis, and the rear discs being angled so that during soil cultivation they displace soil towards the longitudinal axis, and
- **in that** the relative distance (X) between the inner fore disc and the inner rear disc is greater than the relative distance (Y) between the outer fore disc and the outer rear disc.

2. An agricultural machine according to Claim 1, wherein an angle (β1) between the rotation axis (Rfl) of the fore disc (3vf, 3hf) and the fore structure element (5a1, 5a2) is essentially of the same magnitude as an angle (β2) between the rotation axis (Rb) of the rear disc (3vb, 3hb) and the rear structure element (5b1, 5b2).

3. An agricultural machine according to either of the preceding claims, wherein the difference (α3) between the first and the second angle is 2-6 degrees, preferably approximately 3 degrees.

4. An agricultural machine according to any one of the preceding claims, wherein the left fore disc (3vf) is mounted on a fore structure element (5a1) and the right rear disc (3hb) is mounted on a right rear structure element (5b2) via a respective connecting member (6), and wherein the fore structure element (5a1) and the right rear structure element (5b2) are orientated at an angle (α3) relative to each other.

5. An agricultural machine according to Claim 4, wherein an angle (β1) between the rotation axis (Rf1) of the left fore disc (3vf) and the fore structure element (5a1) is essentially of the same magnitude as an angle (β2) between the rotation axis (Rb) of the right rear disc (3hb) and the right rear structure element (5b2).

6. An agricultural machine according to any one of the preceding claims, wherein the right fore disc (3hf) is mounted on a fore structure element (5a2) and the left rear disc (3vb) is mounted on a left rear structure element (5b1) via a respective connecting member (6), and wherein the fore structure element (5a2) and the left rear structure element (5b1) are orientated at an angle (α3) relative to each other.

7. An agricultural machine according to Claim 6, wherein an angle (β1) between the rotation axis (Rf1) of the right fore disc (3hf) and the fore structure element (5a2) is essentially of the same magnitude as an angle (β2) between the rotation axis (Rb) of the left rear disc (3vb) and the left rear structure element (5b1).

8. An agricultural machine according to any one of the preceding claims, wherein a distance (A) between those of the rear discs (3vb, 3hb) that are located nearest the longitudinal axis (L) is greater than a distance between those of the fore discs (3i) that are located nearest the longitudinal axis (L).

## Patentansprüche

1. Landmaschine, welche mehrere Scheiben (3, 3vf, 3hf, 3vb, 3hb) für die Bodenbearbeitung umfasst, von denen über ein entsprechendes Verbindungselement (6) mindestens eine vordere Scheibe (3vf, 3hf) an einem vorderen Strukturelement (5a1, 5a2) befestigt ist und mindestens eine hintere Scheibe (3vb, 3bb) an einem hinteren Strukturelement (5b1, 5b2) befestigt ist, wobei die vorderen und die hinteren Strukturelemente (5a1, 5a2, 5b1, 5b2) zueinander in einem Winkel (α3) orientiert sind, **dadurch gekennzeichnet,**
- **dass** ein erster Winkel (αf1) zwischen der Rotationsachse (Rf1) der vorderen Scheibe (3vf, 3hf), projiziert in eine horizontale Ebene, und einer gedanklichen horizontalen Querachse (T), welche senkrecht zu der vorgesehenen Fahrtrichtung (F) der Landmaschine verläuft, größer ist als ein zweiter Winkel (α2) zwischen der Rotationsachse (Rb) der hinteren Scheibe (3vb, 3hb), projiziert in die horizontale Ebene, und der Querachse (T),
- **dass** mindestens zwei vordere Scheiben (3vf, 3hf) und mindestens zwei hintere Scheiben (3vb, 3hb) auf jeder Seite einer gedanklichen Längsachse (L) angeordnet sind, welche parallel zur Fahrtrichtung (F) Verläuft, wobei eine innere vordere Scheibe und eine innere hintere Scheibe (3i, 3vf, 3hf, 3vb, 3hb) näher an der Längsachse (L) angeordnet sind als eine äußere vordere Scheibe bzw. eine äußere hintere Scheibe (3vf, 3hf, 3vb, 3hb), wobei die linke vordere Scheibe (3vf) und die linke hintere Scheibe (3vb) in Bezug auf die rechte vordere Scheibe (3hf) bzw. die rechte hintere Scheibe (3hb) in Gegenrichtung angewinkelt sind, wobei die vorderen Scheiben so angewinkelt sind, dass sie bei der Bodenbearbeitung Erde von der Längsachse wegbewegen, und die hinteren Scheiben so angewinkelt sind, dass sie bei der Bodenbearbeitung Erde zur Längsachse hinbewegen, und
- **dass** der relative Abstand (X) zwischen der inneren vorderen Scheibe und der inneren hinteren Scheibe größer ist als der relative Abstand (Y) zwischen der äußeren vorderen Scheibe und der äußeren hinteren Scheibe.

2. Landmaschine nach Anspruch 1, wobei ein Winkel (β1) zwischen der Rotationsachse (Rf1) der vorderen Scheibe (3vf, 3hf) und dem vorderen Strukturelement (5a1, 5a2) im Wesentlichen dieselbe Größenordnung aufweist wie ein Winkel (β2) zwischen der Rotationsachse (Rb) der hinteren Scheibe (3vb, 3hb) und dem hinteren Strukturelement (5b1, 5b2).

3. Landmaschine nach einem der vorhergehenden Ansprüche, wobei die Differenz (α3) zwischen dem ersten und dem zweiten Winkel 2 bis 6 Grad, vorzugsweise ungefähr 3 Grad beträgt.

4. Landmaschine nach einem der vorhergehenden Ansprüche, wobei über ein entsprechendes Verbindungselement (6) die linke vordere Scheibe (3vf) an einem vorderen Strukturelement (5a1) angebracht ist und die rechte hintere Scheibe (3hb) an einem rechten hinteren Strukturelement (5b2) angebracht ist und wobei das vordere Strukturelement (5a1) und das rechte hintere Strukturelement (5b2) zueinander in einem Winkel (α3) orientiert sind.

5. Landmaschine nach Anspruch 4, wobei ein Winkel (β1) zwischen der Rotationsachse (Rf1) der linken vorderen Scheibe (3vf) und dem vorderen Strukturelement (5a1) im Wesentlichen dieselbe Größenordnung aufweist wie ein Winkel (β2) zwischen der Rotationsachse (Rb) der rechten hinteren Scheibe (3hb) und dem rechten hinteren Strukturelement (5b2).

6. Landmaschine nach einem der vorhergehenden Ansprüche, wobei über ein entsprechendes Verbindungselement (6) die rechte vordere Scheibe (3hf) an einem vorderen Strukturelement (5a2) angebracht ist und die linke hintere Scheibe (3vb) an einem linken hinteren Strukturelement (5b1) angebracht ist und wobei das vordere Strukturelement (5a2) und das linke hintere Strukturelement (5b1) zueinander in einem Winkel (α3) orientiert sind.

7. Landmaschine nach Anspruch 6, wobei ein Winkel (β1) zwischen der Rotationsachse (Rf1) der rechten vorderen Scheibe (3hf) und dem vorderen Strukturelement (5a2) im Wesentlichen dieselbe Größenordnung aufweist wie ein Winkel (β2) zwischen der Rotationsachse (Rb) der linken hinteren Scheibe (3vb) und dem linken hinteren Strukturelement (5b1).

8. Landmaschine nach einem der vorhergehenden Ansprüche, wobei ein Abstand (A) zwischen jenen der hinteren Scheiben (3vb, 3hb) die der Längsachse (L) am nächsten sind, größer ist als ein Abstand zwischen jenen der vorderen Scheiben (3i), die der Längsachse (L) am nächsten sind.

## Revendications

1. Machine agricole comprenant une pluralité de disques (3, 3vf, 3hf, 3vb, 3hb) pour la culture de la terre, dont au moins un disque avant (3vf, 3hf) est monté sur un élément de structure avant (5a1, 5a2) et au moins un disque arrière (3vb, 3hb) est monté sur un élément de structure arrière (5b1, 5b2) via un organe de connexion respectif (6), dans laquelle les éléments de structure avant et arrière (5a1, 5a2, 5b1, 5b2) sont orientés l'un par rapport à l'autre selon un angle (α3), **caractérisée**
**en ce qu'**un premier angle (αf1) entre l'axe de rotation (Rf1) du disque avant (3vf, 3hf), projeté dans un plan horizontal, et un axe transversal horizontal conceptuel (T), qui est perpendiculaire au sens de la marche prévu (F) de la machine agricole, est plus grand qu'un second angle (α2) entre l'axe de rotation (Rb) du disque arrière (3vb, 3hb), projeté dans le plan horizontal, et l'axe transversal (T),
**en ce qu'**au moins deux disques avant (3vf, 3hf) et au moins deux disques arrière (3vb, 3hb) sont situés de chaque côté d'un axe longitudinal conceptuel (L), qui est parallèle au sens de la marche (F), un disque avant intérieur et un disque arrière intérieur (3i, 3vf, 3hf, 3vb, 3hb) étant situés plus près de l'axe longitudinal (L) qu'un disque avant extérieur et un disque arrière extérieur (3vf, 3hf, 3vb, 3hb), respectivement, le disque avant gauche (3vf) et le disque arrière gauche (3vb) formant un angle dans la direction opposée par rapport au disque avant droit (3hf) et au disque arrière droit (3hb), respectivement, les disques avant formant un angle de telle sorte que pendant la culture de la terre ils déplacent de la terre de manière à l'éloigner de l'axe longitudinal, et les disques arrière formant un angle de telle sorte que pendant la culture de la terre ils déplacent de la terre vers l'axe longitudinal, et
**en ce que** la distance relative (X) entre le disque avant intérieur et le disque arrière intérieur est supérieure à la distance relative (Y) entre le disque avant extérieur et le disque arrière extérieur.

2. Machine agricole selon la revendication 1, dans laquelle un angle (β1) entre l'axe de rotation (Rf1) du disque avant (3vf, 3hf) et l'élément de structure avant (5a1, 5a2) est essentiellement de la même grandeur qu'un angle (β2) entre l'axe de rotation (Rb) du disque arrière (3vb, 3hb) et l'élément de structure arrière (5b1, 5b2).

3. Machine agricole selon l'une ou l'autre des revendications précédentes, dans laquelle la différence (α3) entre le premier et le second angle est de 2 à 6 degrés, de préférence approximativement de 3 degrés.

4. Machine agricole selon l'une quelconque des revendications précédentes, dans laquelle le disque avant gauche (3vf) est monté sur un élément de structure avant (5a1) et le disque arrière droit (3hb) est monté sur un élément de structure arrière droit (5b2) par le biais d'un organe de connexion respectif (6), et dans laquelle l'élément de structure avant (5a1) et l'élément de structure arrière droit (5b2) sont orientés l'un par rapport à l'autre selon un angle (α3).

5. Machine agricole selon la revendication 4, dans laquelle un angle (β1) entre l'axe de rotation (Rf1) du disque avant gauche (3vf) et l'élément de structure avant (5a1) est essentiellement de la même grandeur qu'un angle (β2) entre l'axe de rotation (Rb) du disque arrière droit (3hb) et l'élément de structure arrière droit (5b2).

6. Machine agricole selon l'une quelconque des revendications précédentes, dans laquelle le disque avant droit (3hf) est monté sur un élément de structure avant (5a2) et le disque arrière gauche (3vb) est monté sur un élément de structure arrière gauche (5b1) par le biais d'un organe de connexion respectif (6), et dans laquelle l'élément de structure avant (5a2) et l'élément de structure arrière gauche (5b1) sont orientés l'un par rapport à l'autre selon un angle (α3).

7. Machine agricole selon la revendication 6, dans laquelle un angle (β1) entre l'axe de rotation (Rf1) du disque avant droit (3hf) et l'élément de structure avant (5a2) est essentiellement de la même grandeur qu'un angle (β2) entre l'axe de rotation (Rb) du disque arrière gauche (3vb) et l'élément de structure arrière gauche (5b1).

8. Machine agricole selon l'une quelconque des revendications précédentes, dans laquelle une distance (A) entre ceux parmi les disques arrière (3vb, 3hb) qui sont situés au plus proche de l'axe longitudinal (L) est supérieure à une distance entre ceux parmi les disques avant (3i) qui sont situés au plus proche de l'axe longitudinal (L).
